# EUROPEAN PATENT SPECIFICATION

(11) **EP 3 543 517 B1**
(45) Date of publication and mention of the grant of the patent: **24.07.2024**
(21) Application number: 17904996.0
(22) Date of filing: 18.10.2017
(51) Int. Cl.: F02K 9/46, F04D 13/02, F04D 13/04, F04D 29/049, F04D 29/58

(54) **PUMP FOR ROCKET FUEL**
PUMPE FÜR EINEN RAKETENTREIBSTOFF
POMPE POUR CARBURANT DE FUSÉE

(30) Priority: 03.04.2017 JP 2017073690
(43) Date of publication of application: 25.09.2019
(73) Proprietor: IHI Corporation, Tokyo 135-8710 (JP)
(72) Inventor: MOTOMURA, Taiichi, Tokyo 135-8710 (JP); MORI, Hatsuo, Tokyo 135-8710 (JP); SAKAGUCHI, Hiroyuki, Tokyo 135-8710 (JP)
(74) Representative: MERH-IP Matias Erny Reichl Hoffmann Patentanwälte PartG mbB
(86) International application number: PCT/JP2017/037696
(87) International publication number: WO 2018/185961

(56) References cited:
- EP-A2- 1 801 420
- EP-A2- 1 801 420
- JP-A- 2008 171 718
- RU-C1- 2 464 208
- SU-A1- 860 230
- US-A- 4 226 574
- US-A1- 2014 265 692
- US-A1- 2016 177 963
- DATABASE WPI Week 201332, Derwent World Patents Index; AN 2013-H14814, XP002799264

## Description

### [Technical Field]

The present disclosure relates to a rocket fuel pump.

### [Background Art]

Patent Document 1 below discloses a rocket engine. In this rocket engine, fuel (a liquid propellant) is pressure-fed to a combustion chamber by a first pump and a second pump (rocket fuel pump) which are driven by a turbine. The fuel described above is a cryogenic propellant such as, for example, liquefied methane, liquefied natural gas, liquid oxygen, or liquid hydrogen.

Patent Document 2 below discloses a centrifugal pump with magnetic coupling. In this pump, a rotary joint is provided for axially supporting a rotor-magnetic rotor unit, wherein axially adjacent magnets have radially opposing north poles on a radially inside member and a radially outside member. Pole changing in the axial direction forms a passive axial bearing which acts contactlessly and receives axial forces between the members.

Patent Document 3 below discloses a turbopump unit for a rocket engine, wherein the turbopump unit comprises a turbine, an oxidiser and coaxially mounted fuel pumps each containing one centrifugal impeller, an internal shaft and a turbine wheel installed on the internal shaft, wherein the impeller is connected to the internal shaft through a magnetic coupling.

### [Citation List]

[Patent Document 1] Japanese Unexamined Patent Application, First Publication No. 2014-159769
[Patent Document 2] European Patent Application, Publication No. EP 1 801 420 A2
[Patent Document 3] Russian Patent, Publication No. RU 2 481 489 C1

### [Summary of Invention]

### [Technical Problem]

Incidentally, since the rocket fuel pump described above has a structure in which a rotating shaft is rotatably supported by a casing using a mechanical bearing, a fuel (fluid) leakage path is formed between the rotating shaft and the casing. In this rocket fuel pump, although the leakage amount of fuel (fluid) can be reduced by providing a sealing mechanism between the rotating shaft and the casing, the leakage amount of fuel (fluid) cannot be made zero and the leaked fuel is inevitably discarded.

In disposable rocket engines, there is no major problem in discarding leaked fuel. However, in a rocket engine of a type that is used over a long period of time in orbit, disposal of leaked fuel is a major problem since it is directly related to the service life of the engine.

The present disclosure has been made in view of the above circumstances, and it is an objective thereof to prevent rocket fuel from leaking through a rotating shaft of a rocket fuel pump.

### [Solution to Problem]

To achieve the above-described objective, a first aspect of the present disclosure is a rocket fuel pump including a rotating body mounted on a rotating shaft and pressure-feeding rocket fuel when the rotating body is rotationally driven by a drive source, and the rocket fuel pump includes a magnetic coupling which is configured to magnetically couple the rotating shaft and a drive shaft of the drive source, wherein the magnetic coupling includes a plurality of driven side magnets provided on the rotating shaft and a plurality of drive side magnets provided on the drive shaft of the drive source, the driven side magnets and the drive side magnets are permanent magnets. The drive side magnets include a plurality of main drive side magnets facing the driven side magnets in a radial direction of the rotating shaft and configured to have a polarity opposite to a polarity of the driven side magnets, and a plurality of sub drive side magnets disposed to sandwich the main drive side magnets in an extending direction of the rotating shaft and configured to have the same polarity as the driven side magnets The driven side magnets are provided in an annular shape at a predetermined angular pitch around a rotation central axis of the rotating shaft and the drive side magnets have an annular shape with the same angular pitch as the driven side magnet. The main drive side magnets and the driven side magnets have a similar length in an extending direction of a rotation central axes of the rotating shaft and the drive shaft.

### [Effects of Invention]

According to the present disclosure, since the magnetic coupling that magnetically couples the rotating shaft and the drive shaft of the drive source is provided, rocket fuel can be prevented from leaking through the rotating shaft.

### [Brief Description of Drawings]

Fig. 1 is a cross-sectional view showing an overall configuration of a rocket fuel pump according to one embodiment of the present disclosure.
Fig. 2Ais a cross-sectional view taken along line A in Fig. 1.
Fig. 2B is a cross-sectional view taken along line B in Fig. 1.
Fig. 2C is a cross-sectional view taken along line C in Fig. 1.

### [Description of Embodiments]

Hereinafter, one embodiment of the present disclosure will be described with reference to the drawings.

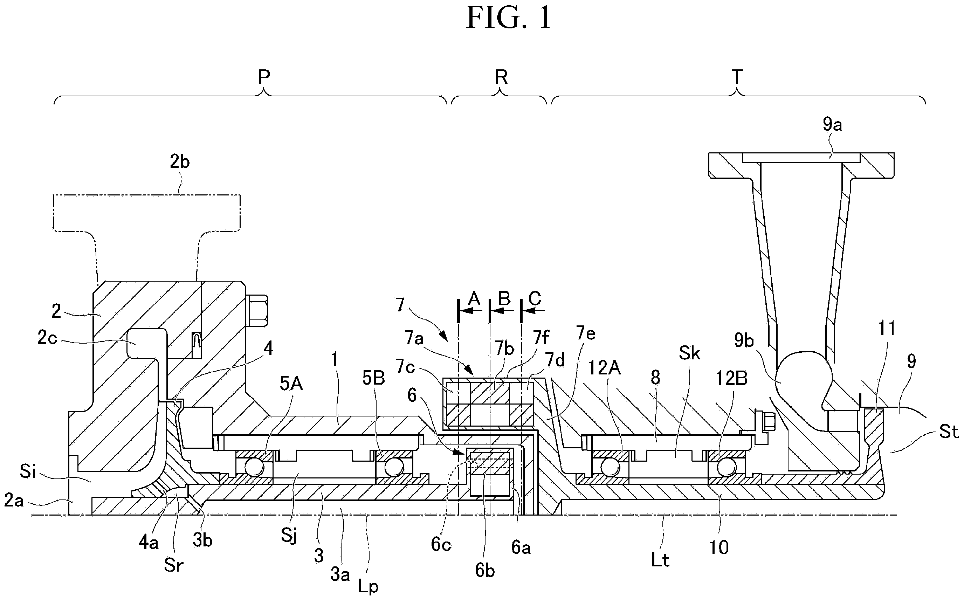

In Fig. 1, a reference sign P denotes a pump, a reference sign T denotes a turbine, and a reference sign R denotes a magnetic coupling. A rocket fuel pump according to the present embodiment is constituted by the pump P and the magnetic coupling R and is rotationally driven by the turbine T serving as a drive source.

The pump P is a rotary machine for pressure-feeding rocket fuel and includes a pump bearing casing 1, a pump casing 2, a rotating shaft 3, a pump impeller 4, and two pump bearings 5A and 5B as shown in Fig. 1. The pump bearing casing 1 may be, for example, a cast product and an accommodating space Sj for accommodating the rotating shaft 3 and the two pump bearings 5A and 5B is formed therein. The accommodating space Sj is a substantially cylindrical space (cylindrical space) having a central axis.

The pump casing 2 is fixed to one end (the left end in Fig. 1, hereinafter abbreviated as "left end") of the pump bearing casing 1, and an accommodating space Si for accommodating the pump impeller 4 is formed therein. That is, this pump casing 2 is provided on one side (the left side in Fig. 1, hereinafter abbreviated as "left side") in a central axis direction of the cylindrical accommodating space Sj. The above-described accommodating space Si is a space communicating with one end (the left end) of the accommodating space Sj and includes a suction port 2a for suctioning rocket fuel formed in a central portion on one side (the left side). Also, a discharge port 2b is formed in a direction perpendicular to the central axis in the accommodating space Si. This discharge port 2b is an opening for discharging the rocket fuel and communicates with the accommodating space Si via a scroll flow path 2c.

The rotating shaft 3 is supported by the pump bearing casing 1 via the two pump bearings 5A and 5B. That is, the rotating shaft 3 is a rod-shaped member of a predetermined length accommodated in the accommodating space Sj via the two pump bearings 5A and 5B so that a rotation central axis Lp is coaxial with a central axis of the accommodating space Si. Since the rotating shaft 3 is supported by the pump bearing casing 1 via the two pump bearings 5A and 5B, the rotating shaft 3 is rotatable around the rotation central axis Lp.

As shown in Fig. 1, a cavity 3a is formed in the rotating shaft 3. This cavity 3a is a cylindrical hole of a predetermined length formed along the rotation central axis Lp at the center of the rotating shaft 3, the other end (the right end in Fig. 1, hereinafter abbreviated as "right end") is open to the accommodating space Sj, and one end is closed in the vicinity of an inner side of the pump impeller 4 except for communication holes 3b to be described below. Also, the communication holes 3b communicating with the one end of the cavity 3a are formed in the rotating shaft 3. The communication holes 3b are cylindrical holes that allow the cavity 3a and a space Sr formed on a surface of the rotating shaft 3 to communicate with each other, and the plurality of communication holes 3b are radially provided. Also, the space Sr is an annular space surrounded by the surface of the rotating shaft 3 and an inner surface of the pump impeller 4 inserted at one end (the left end) of the rotating shaft 3.

The pump impeller 4 is a wheel (rotating body) fixed to the one end (the left end) of the rotating shaft 3 as described above. That is, the pump impeller 4 is fixed to the rotating shaft 3 by inserting the one end of the rotating shaft 3 into a fastening hole formed at a rotational center. This pump impeller 4 sends rocket fuel that has flowed into the accommodating space Si from the suction port 2a to the scroll flow path 2c by rotating together with the rotating shaft 3 around the rotation central axis Lp.

Communication holes 4a are formed in the pump impeller 4. The communication holes 4a are cylindrical holes that allow the accommodating space Si and the space Sr to communicate with each other, and the plurality of communication holes 4a are radially provided as in the above-described communication holes 3b of the rotating shaft 3.

The two pump bearings 5A and 5B are provided at a predetermined distance in an extending direction of the rotation central axis Lp of the rotating shaft 3 and support the rotating shaft 3 to be rotatable with respect to the pump bearing casing 1 which is a fixed system. The pump bearings 5A and 5B described above may be, for example, ball bearings.

The magnetic coupling R is a coupling device for magnetically coupling the rotating shaft 3 and a drive shaft 10 of the turbine T (drive source) and includes a driven coupling part 6 and a drive coupling part 7. The driven coupling part 6 includes a driven side holding member 6a and a plurality of (eight) driven side magnets 6b. The driven side holding member 6a is a disc fixed to the other end (right end) of the rotating shaft 3, that is, on a side of the rotating shaft 3 opposite to the pump impeller 4 in a posture perpendicular to the rotation central axis Lp. That is, the driven side holding member 6a is a disc with the rotation central axis Lp of the rotating shaft 3 as a center and has a predetermined thickness in an extending direction of the rotation central axis Lp.

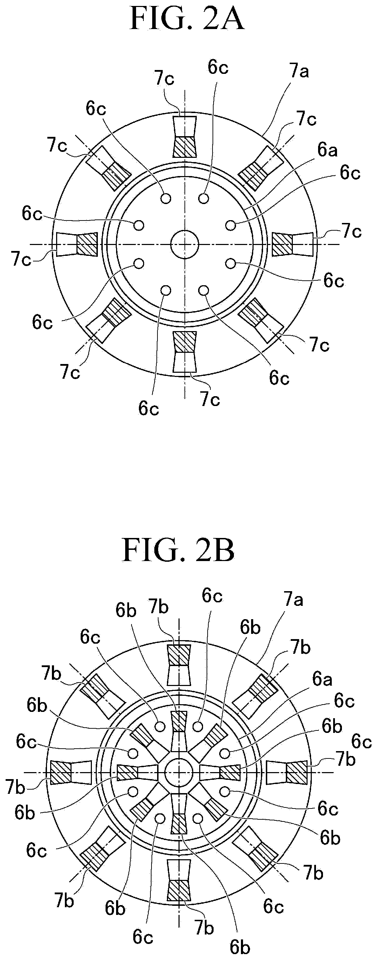

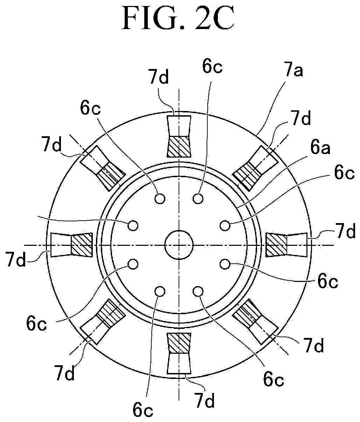

As shown in Fig. 2B, in the driven side holding member 6a, cooling holes 6c are formed between the driven side magnets 6b which are radially aligned. That is, the plurality of (eight) cooling holes 6c are formed in the driven side holding member 6a at a predetermined angular pitch (45° pitch) around the center (the rotation central axis Lp).

As shown in Fig. 1 and Figs. 2A to 2C, the cooling holes 6c are through holes that cause a pair of circular surfaces facing each other in the driven side holding member 6a to communicate with each other, and rocket fuel can freely flow therethrough. That is, the cooling holes 6c are magnet cooling flow paths for forcibly cooling the driven side magnets 6b disposed adjacent to each other using a flow of the rocket fuel.

The plurality of (eight) driven side magnets 6b are provided in the driven side holding member 6a as described above and are provided in an annular shape at a predetermined angular pitch (45° pitch) as shown in Fig. 2B around the rotation central axis Lp of the rotating shaft 3, that is, around the center of the driven side holding member 6a. The driven side magnets 6b are permanent magnets having S poles and N poles and are fixed to the rotating shaft 3 through the disc-shaped driven side holding member 6a.

Also, the driven side magnets 6b are fixed to the driven side holding member 6a in such a posture that virtual line segments each of which connecting a center of S pole and a center of N pole overlap virtual line segments radially extending at the above-described angular pitch (45° pitch) from the center of the driven side holding member 6a (rotation central axis Lp) toward a circumferential edge which forms a circular shape of the driven side holding member 6a. Further, in the driven side magnets 6b shown in Fig. 2B, hatched portions are N poles and white portions are S poles.

Also, as shown in Fig. 2B, the driven side magnets 6b have a deformed columnar shape in which outer diameters of both ends in an axial direction thereof are larger than an outer diameter of a central portion and are fitted into a plurality of (eight) embedding holes formed in an annular shape at a predetermined angular pitch (45° pitch) on the driven side holding member 6a. That is, the embedding holes are formed in substantially the same shape as the driven side magnets 6b and hold the driven side magnets 6b in a fixed state. Further, the driven side holding member 6a holding the driven side magnets 6b as described above is formed of a material having as little magnetoresistance as possible, that is, a material through which magnetic lines of force emitted from the driven side magnets 6b pass easily.

As shown in Fig. 1, the driven coupling part 6 configured as above is accommodated in the accommodating space Sj as in the rotating shaft 3 and the two pump bearings 5A and 5B. That is, among the driven coupling part 6 and the drive coupling part 7 which constitute the magnetic coupling R, the driven coupling part 6 is accommodated inside the pump bearing casing 1.

On the other hand, the drive coupling part 7 includes a drive side holding member 7a, and a plurality of main drive side magnets 7b and sub drive side magnets 7c and 7d. The drive side holding member 7a is a bottomed cylindrical member provided on one end (the left end) of the drive shaft 10, that is, on a side of the drive shaft 10 opposite to a turbine disc 11. That is, the drive side holding member 7a includes a bottom part 7e fixed to the one end (the left end) of the drive shaft 10 and a cylindrical part 7f having one end continuous with the bottom part 7e. The bottom part 7e is a disc-shaped portion centered on a rotation central axis Lt of the drive shaft 10, and the cylindrical part 7f is a cylindrical portion having a predetermined length in an extending direction of the rotation central axis Lt of the drive shaft 10.

The main drive side magnets 7b and the sub drive side magnets 7c and 7d are drive side magnets provided in the drive side holding member 7a as described above and are provided in an annular shape at a predetermined angular pitch (45° pitch) around the rotation central axis Lt of the drive shaft 10 as shown in Figs. 2A to 2C. The main drive side magnets 7b and the sub drive side magnets 7c and 7d are permanent magnets having S poles and N poles and are fixed to the drive shaft 10 through the drive side holding member 7a.

These main drive side magnets 7b and the sub drive side magnets 7c and 7d are fixed to the cylindrical part 7f of the drive side holding member 7a in such a posture that virtual line segments connecting centers of S poles and centers of N poles overlap virtual line segments extending radially at the above-described angular pitch (45° pitch) from the center of the drive side holding member 7a (rotation central axis Lt) toward a circumferential edge which forms a circular shape of the drive side holding member 7a. Further, in Figs. 2A to 2C, N poles of the main drive side magnets 7b and the sub drive side magnets 7c and 7d are shown as hatched portions, and S poles are shown as white portions.

Also, as shown in Figs. 2A to 2C, as in the driven side magnets 6b described above, the main drive side magnets 7b and the sub drive side magnets 7c and 7d have deformed columnar shapes in which outer diameters of both ends in an axial direction thereof are larger than outer diameters of central portions and are fitted into a plurality of (eight) embedding holes formed in an annular shape at a predetermined angular pitch (45° pitch) on the drive side holding member 7a. That is, these embedding holes are formed in substantially the same shape as the main drive side magnets 7b and the sub drive side magnets 7c and 7d and hold the main drive side magnets 7b and the sub drive side magnets 7c and 7d in a fixed state.

The main drive side magnets 7b among the main drive side magnets 7b and the sub drive side magnets 7c and 7d are provided to face the driven side magnets 6b as shown in Fig. 1 and to have an annular shape with the same angular pitch (45° pitch) as that in the driven side magnets 6b as shown in Fig. 2B.

In contrast, the sub drive side magnets 7c and 7d are provided to sandwich the main drive side magnets 7b in an extending direction of the rotation central axis Lt as shown in Fig. 1, and postures thereof are set to have a polarity opposite to that of the main drive side magnets 7b as shown in Fig. 1 and Figs. 2A to 2C. That is, the sub drive side magnets 7c and 7d are provided to have the same polarity as the driven side magnets 6b.

Further, the drive side holding member 7a holding the main drive side magnets 7b and the sub drive side magnets 7c and 7d is formed of a material having as little magnetoresistance as possible as in the driven side holding member 6a described above. That is, the drive side holding member 7a is formed of a material through which magnetic lines of force emitted from the main drive side magnets 7b and the sub drive side magnets 7c and 7d pass easily.

Incidentally, as shown in Fig. 1, the turbine T includes a turbine bearing casing 8, a turbine casing 9, the drive shaft 10, the turbine disc 11, two turbine bearings 12A and 12B, and the like. As in the pump bearing casing 1, the turbine bearing casing 8 may be, for example, a cast product and an accommodating space Sk for accommodating the drive shaft 10 and the two turbine bearings 12A and 12B is formed therein. The accommodating space Sk is a substantially cylindrical space (cylindrical space) having a central axis.

The turbine casing 9 is fixed to the other end of the turbine bearing casing 8, and an accommodating space St for accommodating the turbine disc 11 is formed therein. That is, the turbine casing 9 is provided on the other side (the right side in Fig. 1) in a central axis direction of the accommodating space St. The above-described accommodating space St is a space communicating with the right end of the accommodating space Sk. In the accommodating space St, a supply port 9a is formed in a direction perpendicular to the central axis. The supply port 9a communicates with the accommodating space St via a scroll flow path 9b and is an opening to which a high-pressure drive fluid is supplied. Although not shown, an exhaust port for exhausting the above-described drive fluid is formed at a right central portion of the turbine casing 9.

The drive shaft 10 is supported by the turbine bearing casing 8 via the two turbine bearings 12A and 12B. That is, the drive shaft 10 is a rod-shaped member of a predetermined length accommodated in the accommodating space Sk via the two turbine bearings 12A and 12B so that the rotation central axis Lt is coaxial with a central axis of the accommodating space Sk. Since the drive shaft 10 is supported by the turbine bearing casing 8 via the two turbine bearings 12A and 12B, the drive shaft 10 is rotatable around the rotation central axis Lt.

The turbine disc 11 is a wheel mounted on the other end (the right end) of the drive shaft 10 as described above. That is, the turbine disc 11 is supported by the drive shaft 10 and rotates around the rotation central axis Lt of the drive shaft 10. When the drive fluid flowing in from the scroll flow path 9b is injected to the turbine disc 11, the turbine disc 11 generates rotational power.

The two turbine bearings 12A and 12B are provided at a predetermined distance in an extending direction of the rotation central axis Lt of the drive shaft 10 and support the drive shaft 10 to be rotatable with respect to the turbine bearings 12A and 12B which are fixed systems. The turbine bearings 12A and 12B as described above may be, for example, ball bearings.

Next, an operation of the rocket fuel pump according to the present embodiment will be described in detail.

The pump P is magnetically coupled to the turbine T (driving source) by interposing the magnetic coupling R therebetween. That is, rotational power of the turbine T is transmitted to the rotating shaft 3 of the pump P through the magnetic coupling R, the rotating shaft 3 is driven by the rotational power, and thereby the pump impeller 4 rotates.

As a result, rocket fuel is flowed in the accommodating space Si from the suction port 2a and is sent from a surface of the pump impeller 4 to the scroll flow path 2c. Then, the rocket fuel is supplied to a combustion chamber from the discharge port 2b via the scroll flow path 2c.

Here, as a more detailed description of the power transmission operation of the magnetic coupling R, in the magnetic coupling R, when the plurality of (eight) driven side magnets 6b provided in an annular shape at the predetermined angular pitch (45° pitch) in the driven side holding member 6a of the driven coupling part 6 and the plurality of (eight) main drive side magnets 7b provided in an annular shape at the same predetermined angular pitch (45° pitch) in the drive side holding member 7a of the drive coupling part 7 respectively face each other with different polarities from each other as shown in Fig. 2B, a magnetic attracting force acts between the drive side holding member 7a and the main drive side magnets 7b, respectively.

As a result, the driven side holding member 6a (the rotating shaft 3) rotates in conjunction (driven) with rotation of the drive shaft 10, that is, in accordance with rotation of the drive side holding member 7a. That is, in the pump P, when the rotating shaft 3 synchronously rotates with respect to the drive shaft 10 of the turbine T, the pump impeller 4 rotates, and thereby the rocket fuel is discharged toward the combustion chamber.

According to the rocket fuel pump as described above, since the magnetic coupling R that transmits rotational power of the turbine T (drive source) to the rotating shaft 3 in a non-contact manner by magnetically coupling the rotating shaft 3 to the drive shaft 10 is provided, leakage of the rocket fuel (fluid) through the rotating shaft 3 can be reliably prevented.

Also, in the magnetic coupling R, sub drive side magnets 7c are provided adjacent to one side of the main drive side magnets 7b and sub drive side magnets 7d are provided adjacent to the other side of the main drive side magnets 7b in an extending direction of the rotation central axes Lp and Lt. Since the sub drive side magnets 7c and 7d provided to sandwich the main drive side magnets 7b as described above are provided to have a polarity opposite to that of the main drive side magnets 7b, that is the same polarity as that of the driven side magnets 6b of the driven coupling part 6, a magnetic repulsive force acts between the driven side magnets 6b and the sub drive side magnets 7c and between the driven side magnets 6b and the sub drive side magnets 7d.

Due to the repulsive force, displacement of the rotating shaft 3 in the extending direction of the rotation central axis Lp is restricted. That is, the driven side magnets 6b and the sub drive side magnets 7c and 7d function as thrust bearings which inhibit displacement of the rotating shaft 3 against a thrust force acting on the rotating shaft 3. Therefore, according to the rocket fuel pump of the present embodiment, since the thrust bearings utilizing the magnetic repulsive force as described above is provided, the rotating shaft 3 (pump impeller 4) can be stably rotated with respect to the thrust force acting on the rotating shaft 3.

Also, while the rocket fuel that has flowed into the accommodating space Si from the suction port 2a is sent to the scroll flow path 2c from the surface of the pump impeller 4 by rotation of the pump impeller 4, some of the rocket fuel flows into the accommodating space Sj through a gap existing on a back surface of the pump impeller 4, continues to flow from the accommodating space Sj through the cavity 3a, the communication hole 3b, the space Sr, and the communication hole 4a, and then returns to the surface of the pump impeller 4, that is, to the accommodating space Si.

That is, the pump P of the present embodiment includes a bearing cooling flow path through which the rocket fuel flows via the pump bearings 5A and 5B. Therefore, according to the pump P as described above, the pump bearings 5A and 5B that generate heat in accordance with rotation of the rotating shaft 3 can be effectively cooled using the rocket fuel. Thereby, the rotating shaft 3 (pump impeller 4) can be stably rotated.

Further, the driven side magnets 6b generate heat mainly due to a magnetic interaction with the main drive side magnets 7b, but a plurality of cooling holes 6c (magnet cooling flow paths) are formed in the driven side holding member 6a of the driven coupling part 6. By the rocket fuel flowing through the cooling holes 6c, the driven side magnets 6b provided in the vicinity of the cooling holes 6c are cooled. Therefore, according to the rocket fuel pump of the present embodiment, the driven coupling part 6 can be effectively cooled.

Further, the present disclosure is not limited to the above-described embodiment, and the following modified examples can be considered, for example.
(1) In the above-described embodiment, eight driven side magnets 6b in total, eight main drive side magnets 7b in total, and eight for each of sub drive side magnets 7c and 7d in total are provided at a predetermined angular pitch (45°), but the present disclosure is not limited thereto. The number (number of poles) of driven side magnets 6b, main drive side magnets 7b, and sub drive side magnets 7c and 7d may be any number as long as it is two (angular pitch = 180°) or more, for example.
(2) In the above-described embodiment, the number (number of poles) of driven side magnets 6b and the number (number of poles) of drive side magnets (the main drive side magnets 7b and the sub drive side magnets 7c and 7d) are made to be the same. In an example not falling into the scope of the claims, the number (number of poles) of drive side magnets may be greater than the number (number of poles) of driven side magnets 6b.
(3) In the above embodiment, the driven side magnets 6b and the drive side magnets (the main drive side magnets 7b and the sub drive side magnets 7c and 7d) have a deformed columnar shape in which the outer diameters at both ends are larger than the outer diameter at the central portion, but the present disclosure is not limited thereto. Although a centrifugal force in accordance with the rotation acts on the driven side magnets 6b and the drive side magnets (the main drive side magnets 7b and the sub drive side magnets 7c and 7d) in a radial direction of the rotating shaft 3 and in a radial direction of the drive shaft 10, since the above-described deformed columnar shape is a device for more reliably holding the driven side magnets 6b and the drive side magnets (the main drive side magnets 7b and the sub drive side magnets 7c and 7d) on which a centrifugal force acts using the embedding holes, other shapes may also be used. For example, a deformed conical shape or a deformed columnar shape in which an outer diameter on a side close to the rotation central axes Lp and Lt is larger than an outer diameter on a side distant from the rotation central axes Lp and Lt may be used.
(5) In the above-described embodiment, a drive source is the turbine T, but the present disclosure is not limited thereto. Instead of the turbine T, other power sources, for example, an electric motor may be used.
(6) In the above-described embodiment, the driven side magnets 6b, the main drive side magnet 7b, and the sub drive side magnets 7c and 7d are permanent magnets. In an example not falling into the scope of the claims, instead of the permanent magnet, an electromagnet may be employed and a driving current may be supplied by using a slip ring or the like or by non-contact power feeding.

### [Industrial Applicability]

According to the present disclosure, rocket fuel can be prevented from leaking through the rotating shaft of the rocket fuel pump.

### [Reference Signs List]

P Pump
T Turbine
R Magnetic coupling
1 Pump bearing casing
2 Pump casing
2a Suction port
2b Discharge port
3 Rotating shaft
3a Cavity
3b Communication hole
4 Pump impeller
4a Communication hole
5A, 5B Pump bearing
6 Driven coupling part
6a Driven side holding member
6b Driven side magnet
6c Cooling hole
7 Drive coupling part
7a Drive side holding member
7b Main drive side magnet (drive side magnet)
7c, 7d Sub drive side magnet (drive side magnet)
7e Bottom part
7f Cylindrical part
8 Turbine bearing casing
9 Turbine casing
10 Drive shaft
11 Turbine disc
12A, 12B Turbine bearing

## Claims

1. A rocket fuel pump (P, R) including a rotating body (4) mounted on a rotating shaft (3) and pressure-feeding rocket fuel when the rotating body (4) is rotationally driven by a drive source (T), the rocket fuel pump (P, R) comprising:
a magnetic coupling (R) which is configured to magnetically couple the rotating shaft and a drive shaft (10) of the drive source (T), wherein
the magnetic coupling (R) includes a plurality of driven side magnets (6b) provided on the rotating shaft (3) and a plurality of drive side magnets (7b, 7c, 7d) provided on the drive shaft (10) of the drive source (T),
the driven side magnets (6b) and the drive side magnets (7b, 7c, 7d) are permanent magnets,
the driven side magnets (6b) are provided in an annular shape at a predetermined angular pitch around a rotation central axis (Lp) of the rotating shaft (3), and
the drive side magnets (7b, 7c, 7d) have an annular shape with the same angular pitch as the driven side magnets (6b),
**characterized in that**
the drive side magnets (7b, 7c, 7d) include:
a plurality of main drive side magnets (7b) facing the driven side magnets (6b) in a radial direction of the rotating shaft (3) and configured to have a polarity opposite to a polarity of the driven side magnets (6b); and
a plurality of sub drive side magnets (7c, 7d) disposed to sandwich the main drive side magnets (7b) in an extending direction of the rotating shaft (3) and configured to have the same polarity as the driven side magnets (6b), and **in that**
the main drive side magnets (7b) and the driven side magnets (6b) have a similar length in an extending direction of a rotation central axes (Lp, Lt) of the rotating shaft (3) and the drive shaft (10).

2. The rocket fuel pump (P, R) according to claim 1, further comprising a magnet cooling flow path (6c) which is configured to forcibly cool the driven side magnet (6b) using the rocket fuel.

3. The rocket fuel pump (P, R) according to claim 1 or 2, further comprising a bearing cooling flow path in which the rocket fuel flows through a pump bearing (5A, 5B) which supports the rotating shaft (3).

## Patentansprüche

1. Raketenkraftstoffpumpe (P, R), die einen Drehkörper (4), der auf einer Drehwelle (3) montiert ist und mittels Druck Raketenkraftstoff zuführt, wenn der Drehkörper (4) durch eine Antriebsquelle (T) drehend angetrieben wird, enthält, wobei die Raketenkraftstoffpumpe (P, R) umfasst:
eine Magnetkupplung (R), die eingerichtet ist, die Drehwelle und eine Antriebswelle (10) der Antriebsquelle (T) magnetisch zu koppeln, wobei
die Magnetkupplung (R) eine Vielzahl von Magneten auf der angetriebenen Seite (6b), welche auf der Drehwelle (3) vorgesehen sind, und eine Vielzahl antriebsseitiger Magnete (7b, 7c, 7d), die auf der Antriebswelle (10) der Antriebsquelle (T) vorgesehen sind, enthält,
die Magneten auf der angetriebenen Seite (6b) und die antriebsseitigen Magnete (7b, 7c, 7d) Permanentmagnete sind,
die Magneten auf der angetriebenen Seite (6b) in einer Ringform mit einem vorbestimmten Winkelabstand um eine Drehmittelachse (Lp) der Drehwelle (3) vorgesehen sind, und
die antriebsseitigen Magnete (7b, 7c, 7d) eine Ringform mit dem gleichen Winkelabstand wie die Magneten auf der angetriebenen Seite (6b) aufweisen,
**dadurch gekennzeichnet, dass**
die antriebsseitigen Magnete (7b, 7c, 7d) umfassen:
mehrere antriebsseitige Hauptmagnete (7b), die den Magneten auf der angetriebenen Seite (6b) in einer radialen Richtung der Drehwelle (3) zugewandt sind und eingerichtet sind, eine Polarität aufzuweisen, die einer Polarität der Magneten auf der angetriebenen Seite (6b) entgegengesetzt ist; und
mehrere antriebsseitige Nebenmagnete (7c, 7d), die angeordnet sind, die antriebsseitigen Hauptmagnete (7b) in einer Erstreckungsrichtung der Drehwelle (3) sandwichartig einzuschließen, und die eingerichtet sind, die gleiche Polarität wie die Magnete auf der angetriebenen Seite (6b) aufzuweisen, so dass
die antriebsseitigen Hauptmagnete (7b) und die Magneten auf der angetriebenen Seite (6b) eine ähnliche Länge in einer Erstreckungsrichtung einer Drehmittelachse (Lp, Lt) der Drehwelle (3) und der Antriebswelle (10) aufweisen.

2. Raketenkraftstoffpumpe (P, R) nach Anspruch 1, die ferner einen Magnetkühlströmungsweg (6c) umfasst, der eingerichtet ist, den Magnet auf der angetriebenen Seite (6b) unter Verwendung des Raketenkraftstoffs zwangsweise zu kühlen.

3. Raketenkraftstoffpumpe (P, R) nach Anspruch 1 oder 2, die ferner einen Lagerkühlströmungsweg umfasst, in dem der Raketenkraftstoff durch ein Pumpenlager (5A, 5B) strömt, das die Drehwelle (3) lagert.

## Revendications

1. Pompe à carburant de fusée (P, R) comprenant un corps rotatif (4) qui est monté sur un arbre rotatif (3) et fournit du carburant de fusée par pression lorsque le corps rotatif (4) est entraîné en rotation par une source d'entraînement (T), la pompe à carburant de fusée (P, R) comprenant :
un embrayage magnétique (R) configuré pour coupler magnétiquement l'arbre rotatif et un arbre d'entraînement (10) de la source d'entraînement (T),
dans laquelle
l'embrayage magnétique (R) comprend une pluralité d'aimants côté entraîné (6b) prévus sur l'arbre rotatif (3) et une pluralité d'aimants côté entraînement (7b, 7c, 7d) prévus sur l'arbre d'entraînement (10) de la source d'entraînement (T),
les aimants côté entraîné (6b) et les aimants côté entraînement (7b, 7c, 7d) sont des aimants permanents,
les aimants côté entraîné (6b) sont prévus dans une forme annulaire avec un pas angulaire prédéterminé autour d'un axe central de rotation (Lp) de l'arbre rotatif (3), et
les aimants côté entraînement (7b, 7c, 7d) ont une forme annulaire avec le même pas angulaire que les aimants côté entraîné (6b),
**caractérisée en ce que**
les aimants côté entraînement (7b, 7c, 7d) comprennent :
une pluralité d'aimants principaux côté entraînement (7b) faisant face aux aimants côté entraîné (6b) dans une direction radiale de l'arbre rotatif (3) et configurés pour avoir une polarité opposée à une polarité des aimants côté entraîné (6b) ; et
une pluralité d'aimants secondaires côté entraînement (7c, 7d) agencés pour prendre en sandwich les aimants principaux côté entraînement (7b) dans une direction d'extension de l'arbre rotatif (3) et configurés pour avoir la même polarité que les aimants côté entraîné (6b), de sorte que
les aimants principaux côté entraînement (7b) et les aimants côté entraîné (6b) ont une longueur similaire dans une direction d'extension d'un axe central de rotation (Lp, Lt) de l'arbre rotatif (3) et de l'arbre d'entraînement (10).

2. Pompe à carburant de fusée (P, R) selon la revendication 1, comprenant en outre un trajet d'écoulement de refroidissement d'aimant (6c) configuré pour refroidir de force l'aimant côté entraîné (6b) en utilisant le carburant de fusée.

3. Pompe à carburant de fusée (P, R) selon la revendication 1 ou 2, comprenant en outre un trajet d'écoulement de refroidissement de palier dans lequel le carburant de fusée s'écoule à travers un palier de pompe (5A, 5B) qui supporte l'arbre rotatif (3).
